**Europäisches Patentamt**

**European Patent Office**

**Office européen des brevets**

(19)

(11) Veröffentlichungsnummer : **0 169 942**
**B1**

(12)

# EUROPÄISCHE PATENTSCHRIFT

(45) Veröffentlichungstag der Patentschrift :
**02.11.89**

(51) Int. Cl.⁴ : **B 25 J 17/02**

(21) Anmeldenummer : **84116215.9**

(22) Anmeldetag : **22.12.84**

(54) **Getriebekopf für Manipulatoren.**

(30) Priorität : **03.08.84 DE 3428748**

(43) Veröffentlichungstag der Anmeldung :
**05.02.86 Patentblatt 86/06**

(45) Bekanntmachung des Hinweises auf die Patenterteilung : **02.11.89 Patentblatt 89/44**

(84) Benannte Vertragsstaaten :
**AT CH DE FR GB IT LI SE**

(56) Entgegenhaltungen :
**EP--A-- 0 072 624**
**EP--A-- 0 133 499**
**DE--A-- 2 717 870**
**FR--A-- 2 551 390**
**SU--A--    766 856**
**US--A-- 3 712 481**
**US--A-- 4 046 262**
**US--A-- 4 151 390**

(73) Patentinhaber : **KUKA Schweissanlagen & Roboter GmbH**
**Blücherstrasse 144**
**D-8900 Augsburg (DE)**

(72) Erfinder : **Zimmer, Ernst**
**Michael-Steinherr Strasse 34**
**D-8904 Friedberg (DE)**

(74) Vertreter : **Ernicke, Hans-Dieter, Dipl.-Ing. et al**
**Schwibbogenplatz 2b**
**D-8900 Augsburg (DE)**

EP 0 169 942 B1

**Beschreibung**

Die Erfindung betrifft einen Getriebekopf für Manipulatoren, bestehend aus drei hintereinander angeordneten und um zueinander schräge Achsen gelagerten Kopfteilen.

Durch die DE-B-29 27 485 und die DE-A-27 45 932 sind Getriebeköpfe mit zwei hintereinander angeordneten und um eine schräge Achse aneinander gelagerten Kopfteilen bekannt, von denen der vordere Kopfteil einen darin drehbar gelagerten und angetriebenen Arbeitsflansch trägt. In der Streckstellung dieser vorbekannten Getriebeköpfe stimmen die Drehachse des hinteren Kopfteiles und die Drehachse des Arbeitsflansches miteinander überein. Diese Grundstellung bringt Schwierigkeiten bei der rechnerisch gesteuerten Bewegung des Manipulators. Eine vom Programm vorgegebene Verdrehung eines am Arbeitsflansch angeordneten Werkzeuges um seine eigene Drehachse läßt in der Durchführung der rechnerischen Vorgabe nämlich offen, ob der Getriebekopf um die Achse des hinteren Kopfteiles oder um die Achse des Arbeitsflansches gedreht werden soll.

Außerdem ist der Bewegungsbereich des Arbeitsflansches und damit des daran befestigbaren Werkzeuges oder Werkstückes begrenzt. Im Falle der DE-B-29 27 485 kann die Achse des Arbeitsflansches aus der Streckstellung nur um 90° verschwenkt werden. Beim Gegenstand der DE-A 27 45 932 bildet die Drehachse des vorderen Kopfteiles gegenüber der Drehachse des hinteren Kopfteiles in der Streckstellung einen Winkel von 60°, so daß die Achse des Arbeitsflansches aus der Streckstellung um bis zu 120° verschwenkt werden kann.

Der Erfindung liegt die Aufgabe zugrunde, einen Getriebekopf für Manipulatoren so auszubilden, daß die erwähnten Zweideutigkeiten gar nicht entstehen können und außerdem ein wesentlich vergrößerter Bewegungsspielraum bei kompakter Bauweise des Getriebekopfes erreicht wird.

Die Lösung dieser Aufgabe ergibt sich aus den Merkmalen des Patentanspruches 1.

Diese unterscheiden sich vom Stand der Technik dadurch, daß der erfindungsgemäße Getriebekopf drei hintereinander angeordnete und um zueinander schräge Achsen gelagerte Kopfteile besitzt, deren schräge Achsen in der Streckstellung des Getriebekopfes sich in einer anderen Lage als beim Stand der Technik befinden.

Bei der Erfindung trägt der vordere der drei Kopfteile den Arbeitsflansch, wobei aber dieser vordere Kopfteil in der Streckstellung nur um eine schräge Achse rotieren kann. Damit wird eine Zweideutigkeit beim Rotieren des Arbeitsflansches um die Achse des Getriebekopfes ausgeschlossen, weil jedenfalls eine Verdrehung des vorderen Kopfteiles nicht dazu führt, daß der Arbeitsflansch um die Achse des Getriebekopfes rotieren kann.

Mit den Merkmalen der Erfindung wird aber auch ein wesentlich vergrößerter Bewegungsspielraum bei kompakter Bauweise des Getriebekopfes erreicht. Wenn man die Winkel der schrägen Achsen für die Lagerung des mittleren am vorderen und hinteren Kopfteil passend wählt, kann die Achse der Flanschfläche aus der Streckstellung des erfindungsgemäßen Getriebekopfes auch um 180° verschwenkt werden.

Ein Getriebekopf für Manipulatoren mit drei hintereinander angeordneten und um schräge Achsen gelagerten Kopfteilen ist allerdings auch Gegenstand der älteren, aber nicht vorveröffentlichten EP-A3 133 499. Von der Offenbarung dieser Schrift unterscheidet sich die Erfindung dadurch, daß der Schnittpunkt der schrägen Achsen der Kopfteile auf der Längsachse des Getriebekopfes liegt, wohingegen die ältere Erfindung lehrt, diesen Schnittpunkt abseits dieser Längsachse vorzusehen.

Damit eröffnet die erfindungsgemäße Lösung den Vorteil, die automatische rechnerische Steuerung der Bewegungsvorgänge schneller zu bewirken, weil die Lage des Schnittpunktes der schrägen Achsen auf der Längsachse des Getriebekopfes die mathematischen Rechnungen wesentlich erleichtert.

Einzelheiten der Erfindung sind in der Zeichnung schematisch und beispielsweise dargestellt. Es zeigen:

Fig. 1 : eine symbolische Seitenansicht eines Getriebekopfes in seiner gestreckten Lage,

Fig. 2 : eine Seitenansicht des Getriebekopfes gem. Fig. 1 mit einer Winkelstellung des vorderen Kopfteiles,

Fig. 3 : eine Seitenansicht des Getriebekopfes gem. Fig. 2 mit einer um 180° verdrehten Lage des Getriebekopfes,

Fig. 4 : eine Seitenansicht des Getriebekopfes gem. Fig. 1 mit einer verschwenkten Stellung des mittleren Kopfteiles,

Fig. 5 : eine Seitenansicht des Getriebekopfes gem. Fig. 1 mit verschwenkter Lage des mittleren und des vorderen Kopfteiles und

Fig. 6 : einen Längsschnitt durch eine konstruktive Gestaltung eines Getriebekopfes mit seinen Antriebszügen.

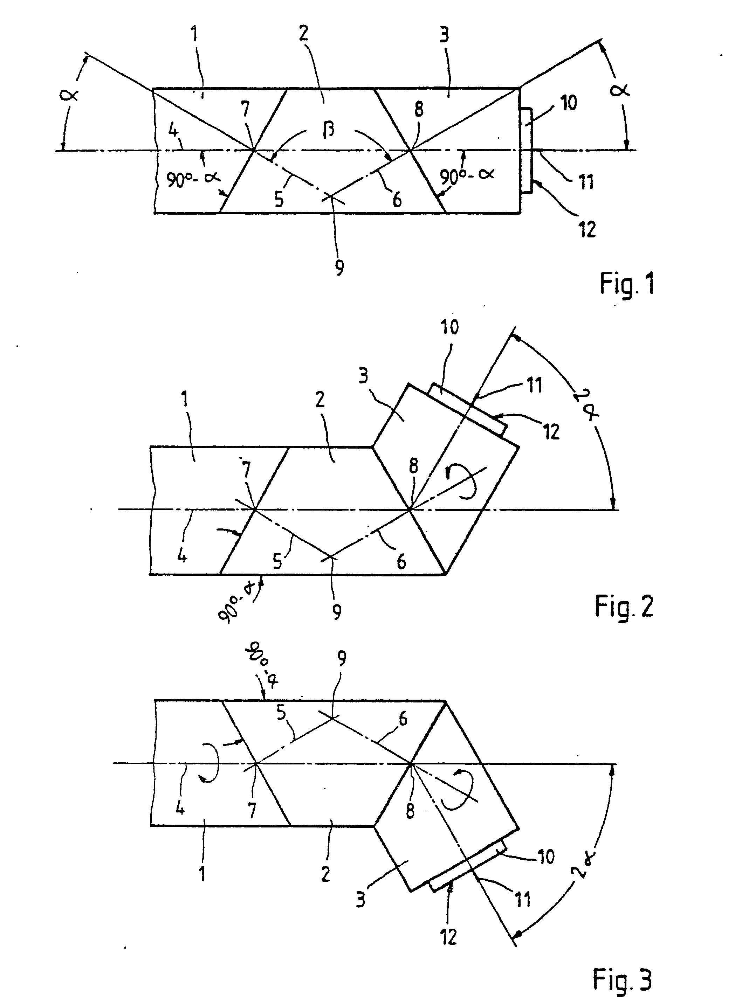

Die Fig. 1 bis 5 dienen zur vorbereitenden Erläuterung der Erfindung. Sie sind allerdings bereits Gegenstand der älteren, nicht vorveröffentlichten EP-A3-133 499.

In Fig. 1 ist ein Getriebekopf in seiner geometrischen Gliederung ganz schematisch als rohrförmiger Körper dargestellt. Danach besitzt der Getriebekopf einen hinteren Kopfteil (1), einen mittleren Kopfteil (2) und einen vorderen Kopfteil (3). Der hintere Kopfteil (1) ist um die Achse (4), die im allgemeinen der Längsachse des Auslegers eines Manipulators entspricht, verdrehbar. An diesem hinteren Kopfteil (1) ist der mittlere Kopfteil (2) um die Schwenkachse (5) drehbar gelagert. Beide Achsen (4, 5) schneiden sich im Schnittpunkt (7). Am mittleren Kopfteil (2) ist wiederum der vordere Kopfteil (3) um die Schwenkachse (6) drehbar gelagert. Diese Schwenkachse (6) schneidet die Achse (4) im Schnittpunkt (8). Der Schnittpunkt (9) der Schwenkachsen (5, 6) befindet sich jedoch radial distanziert von der Achse (4). Die Schwenkachsen (5, 6) stehen zueinander in einem stumpfen Winkel (β), was zur Folge hat, daß die Trennebenen der Kopfteile (1, 2) bzw. (2, 3) zueinander im spitzen Winkel stehen. Vorzugsweise sind die Winkel so gewählt, daß sich Symmetrie ergibt. Im Beispiel steht die schräge Ebene zwischen den einzelnen Kopfteilen (1, 2) bzw. (2, 3) in einem gleichen Winkel, jedoch in umgekehrter Neigung zur Längsachse (4) des Getriebekopfes (1, 2, 3). Allerdings beschränkt sich die Erfindung nicht auf einen stumpfen Winkel (β) zwischen den Schwenkachsen (5, 6). Je größer die Gesamtabwinkelung der Kopfteile (1, 2, 3) zueinander gewünscht ist, desto kleiner kann der Winkel (β) (sogar über den rechten Winkel hinaus) gewählt werden.

Weiterhin ist im Interesse einer Symmetrie angenommen, daß die Achsen (5) und (6) in einem gleichen Winkel (α) zur Längsachse (4) stehen.

Am vorderen Kopfteil (3) befindet sich eine Flanschplatte (10) mit einer Anflanschfläche (12) zur Befestigung des nicht dargestellten Werkzeuges, beispielsweise eines Schweißwerkzeuges. Mit (11) ist symbolisch ein Markierungsstift bezeichnet, der die Lage des Werkzeuges in Abhängigkeit von den später beschriebenen Schwenkmöglichkeiten erkennen läßt.

Im Beispiel der Fig. 2 ist die erste, einfache Schwenkmöglichkeit dargestellt, wonach der vordere Kopfteil (3) um die Schwenkachse (6) um 180° gedreht wird. Unter der Annahme, daß die Schwenkebenen zwischen den einzelnen Kopfteilen (1, 2, 3) symmetrisch zueinander sind und den Winkel 90° — (α) zur Achse (4) bilden, ergibt sich, daß die Verdrehung des vorderen Kopfteiles (3) um seine Schwenkachse (6), und zwar um 180°, zum Ausschlag dieses Kopfteiles (3) um den Winkel (2 α) führt.

Wenn man nun den Getriebekopf in der in Fig. 2, gezeigten Stellung um die Achse (4) um 180° verdreht, wie dies in Fig. 3 dargestellt ist, ergibt sich die spiegelbildliche Stellung des vorderen Kopfteiles (3) gegenüber der Stellung in Fig. 2. Aus der Lage der Achsen (5, 6) sieht man, daß in keiner Stellung die Schwenkachse (6) koaxial zur Achse (4) zu liegen kommt. Infolgedessen ist eine Zweideutigkeit der Achsenlage ausgeschlossen. Man braucht demnach keine programm- oder steuerungstechnischen Manipulationen wie beim Stand der Technik durchzuführen.

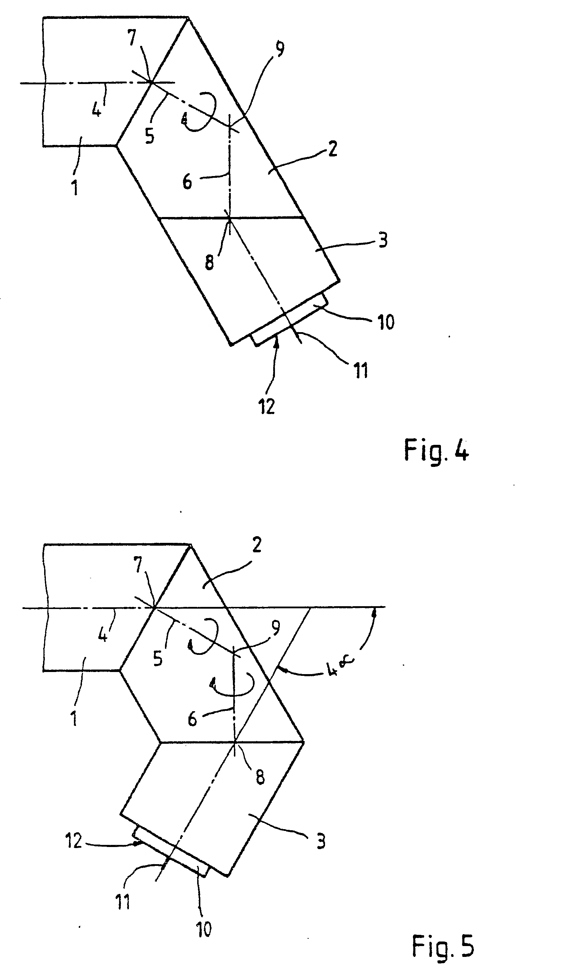

Die Anordnung der Fig. 1 bietet aber darüber hinaus weitere Bewegungsmöglichkeiten des Gelenkkopfes, die sich über diejenigen des Standes der Technik hinaus erstrecken. Fig. 4 zeigt, daß beim Verschwenken des mittleren Kopfteiles (2) um die Schwenkachse (5) sich eine Winkellage ergibt, die derjenigen der Fig. 3 entspricht, ohne daß dabei aber der hintere Kopfteil (1) verdreht worden ist. In dieser in Fig. 4 gezeigten Stellung läßt sich der vordere Kopfteil (3) um die Schwenkachse (6) drehen, so daß sich ein Schwenkwinkel des vorderen Kopfteiles (3) gegenüber dem hinteren Kopfteil (1) um den Betrag 4 α ergibt. Verdreht man in dieser Stellung den hinteren Kopfteil (1) um die Achse (4), dann ergibt sich ein maximaler Bewegungsspielraum für den symbolisch dargestellten Markierungsstift (11) (Fig. 5).

Dieser Bewegungsspielraum ist größer als derjenige des nächstliegenden Standes der Technik. Außerdem ergibt sich durch die erfindungsgemäße Anordnung der Vorteil, daß die Unfallgefahr beim Verschwenken der Teile (1, 2, 3) relativ zueinander durch Vermeidung von Eng- und Klemmstellen wesentlich reduziert werden konnte. Andererseits ist der Gegenstand der Erfindung in der Lage, das Werkstück in der gestreckten Lage des Getriebekopfes um die Achse (4) der Antriebswellen zu verschwenken, wie dies Fig. 1 zeigt. Zu diesem Zweck braucht lediglich die Flanschplatte (10) senkrecht zur Achse (4) am vorderen Kopfteil (3) angeordnet zu werden. Wünscht man diese Koaxialität des Stiftes (11) zur Achse (4) der Antriebswellen nicht, bleibt es unbenommen, die Lage der Flanschplatte (10) in einem anderen Winkel zu wählen.

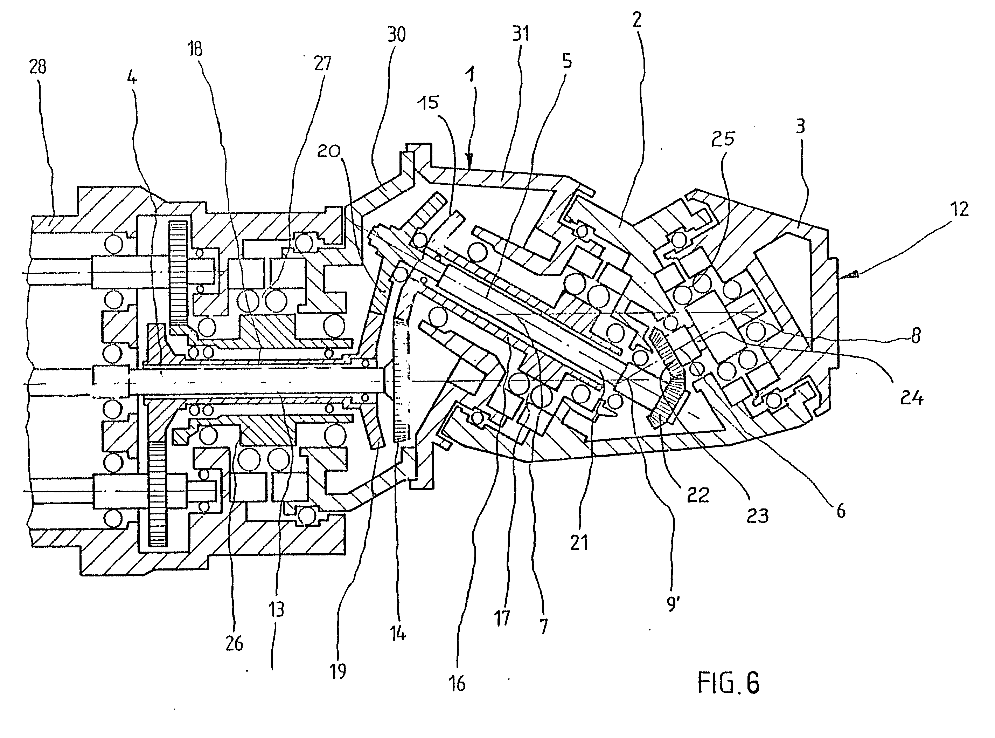

Das Ausführungsbeispiel der Fig. 6 zeigt den konstruktiven Aufbau des erfindungsgemäßen Getriebekopfes in der Strecklage seiner Teile. Danach ist eine innere Antriebswelle (13) über die Kegelräder (14, 15) mit einer Hohlwelle (16) verbunden, welche über ein Untersetzungsgetriebe (17) mit dem mittleren Kopfteil (2) drehschlüssig verbunden ist. Dieser mittlere Kopfteil (2) wird über diese Kegelradanordnung (14, 15) um die Schwenkachse (5) gedreht. Er ist über geeignete Lagerungen am vorderen Kopfteil (1) um eine zur Schwenkachse (5) senkrechte Ebene geführt.

Die mittlere Antriebswelle (18) wirkt über die Kegelräder (19, 20) auf die Zwischenwelle (21) ein, die mit der Schwenkachse (5) übereinstimmt. Am Ende der Zwischenwelle (21) sind Kegelräder (22, 23) zum Antrieb der Abtriebswelle (24) vorgesehen, welche sich im vorderen Kopfteil (3) befindet, der seinerseits gegenüber dem mittleren Kopfteil (2) drehbar gelagert ist und zwar um die Schwenkachse (6). Auch hier ist zwischen der Abtriebswelle (24) und dem vorderen Kopfteil (3) ein Untersetzungsgetriebe (25) vorgesehen.

Die äußere Antriebswelle (26) wirkt über das Untersetzungsgetriebe (27) direkt auf den hinteren Kopfteil (1) ein, der koaxial zum Auslegerarm (28) angeordnet und an diesem drehbar gelagert ist.

Sämtliche Untersetzungsgetriebe (17, 25, 27) sind folglich abtriebsseitig angeordnet, was eine weitgehend spielfreie, räumlich kompakte und damit kleinbauende Getriebekopfkonstruktion zur Folge hat. Diese Untersetzungsgetriebe (17, 25, 27) sind für hohe Untersetzungen vorgesehen.

Beim Ausführungsbeispiel der Erfindung nach Fig. 6 liegt der Schnittpunkt (9') der Achse (5) der Zwischenwelle (21) mit der Achse (6) der Abtriebswelle (24) koaxial zur gemeinsamen Achse (4) der Antriebswellen (13, 18, 26). Zu diesem Zweck ist der Kopfteil (1) beim Beispiel in die Flanschteile (30, 31) zerlegt, von denen der Flanschteil (30) am Auslegerarm (28) drehbar gelagert ist und der Flanschteil (31) das Lager für den mittleren Kopfteil (2) trägt. Mit dem seitlichen Versatz des Flanschteiles (31) wird die Lage der Achse (5) quer zur Achse (4) versetzt, so daß der Schnittpunkt (9') der Achsen (5) und (6) in die gewünschte koaxiale Lage zur Achse (4) kommt.

Die Anflanschfläche (12) ist beim Ausführungsbeispiel radial zur Achse (4) ausgerichtet. Will man das Werkzeug koaxial zur Achse (4) rotieren lassen, braucht man es nur längs der Anflanschfläche (12) radial zu verschieben, bis Koaxialität gegeben ist. In diesem Fall wird der Antrieb der Zwischenwell (21) und der Abtriebswelle (24) blockiert.

Unter der Voraussetzung, daß die Anflanschfläche (12) radial zur Achse (4) steht, gelingt es auf diese Weise, das mit der Anflanschfläche (12) verbundene Werkzeug koaxial zur Achse (4) (oder achsparallel verschoben) zu bewegen, was besonders Bedeutung für solche Manipulatoren hat, deren einzelne Glieder entsprechend den rechtwinkeligen Raumkoordinaten beweglich geführt sind und einen erfindungsgemäß ausgebildeten Getriebekopf tragen.

Stückliste

1 vorderer Kopfteil
2 mittlerer Kopfteil
3 hinterer Kopfteil
4 Achse der Antriebswellen (4. Achse)
5 Schwenkachse des mittleren Kopfteiles
6 Schwenkachse des hinteren Kopfteiles
7 Schnittpunkt
8 Schnittpunkt
9 Schnittpunkt
9' Schnittpunkt
10 Flanschplatte
11 Markierungsstift
12 Anflanschfläche
13 innere Antriebswelle
14 Kegelrad
15 Kegelrad
16 Hohlwelle
17 Untersetzungsgetriebe
18 mittlere Antriebswelle
19 Kegelrad
20 Kegelrad
21 Zwischenwelle
22 Kegelrad
23 Kegelrad
24 Abtriebswelle (6. Achse)
25 Untersetzungsgetriebe
26 äußere Antriebswelle
27 Untersetzungsgetriebe
28 Auslegerarm
30 Flanschteil
31 Flanschteil

**Patentansprüche**

1. Getriebekopf für Manipulatoren, bestehend aus drei hintereinander angeordneten und um zueinander schräge Achsen (5, 6) gelagerten Kopfteilen (1, 2, 3), deren schräge Achsen (5, 6) in der Streckstellung des Getriebekopfes jeweils einen in entgegengesetzter Richtung sich öffnenden spitzen Winkel (α) mit der Längsachse (4) des Getriebekopfes bilden und sich in einem auf der Längsachse (4) befindlichen Punkt (9') derart schneiden, daß die von den schrägen Achsen (5, 6) gebildeten Winkelschenkel nach einer gemeinsamen Seite von der Längsachse (4) weisen, wobei am vorderen Getriebekopfteil (3) eine in der Streckstellung quer zur Längsachse (4) sich erstreckende Anflanschfläche (12) für ein Werkzeug angeordnet ist und zum Antrieb der Getriebekopfteile (1, 2, 3) drei konzentrisch zur Längsachse (4) sich erstreckende Antriebswellen (13, 18, 26) vorgesehen sind, von denen eine der inneren Antriebswellen (18) über einen Winkeltrieb (19, 20) und eine um die schräge Drehachse (5) rotierende Zwischenwelle (21) mit dem das Werkzeug tragenden vorderen Getriebekopfteil (3) und die andere der inneren Antriebswellen (13) mit einem Winkeltrieb (14, 15) dessen Abtriebsrad (15) die Zwischenwelle (21) Konzentrisch mit Spiel umgreift, mit dem mittleren Getriebekopfteil (2) verbunden ist, und daß im mittleren Kopfteil (2) mindestens ein hochuntersetzendes Untersetzungsgetriebe (25) für den Antrieb des vorderen Kopfteiles (3), bevorzugt auch ein solches Untersetzungsgetriebe (17) für den Antrieb des mittleren Kopfteiles (2) angeordnet ist.

2. Getriebekopf nach Anspruch 1, dadurch gekennzeichnet, daß der hintere Kopfteil (1) aus zwei miteinander seitlich versetzt verbundenen Flanschteilen (30, 31) besteht, wodurch die Drechachsen (5, 6) der Zwischenwelle (21) und der Abtriebswelle (24) quer zur Längsachse (4) versetzt sind.

**Claims**

1. Gear head for manipulators, consisting of three head parts (1, 2, 3) arranged one behind the other and mounted about axes (5, 6) inclined with respect to each other, whereof the inclined axes (5, 6) in the elongated position of the gear head respectively form an acute angle (α) with the longitudinal axis (4) of the gear head, the angles opening in opposite directions and the inclined axes (5, 6) intersecting at a point (9') located on the longitudinal axis (4) such that the sides of the angles formed by the inclined axes (5, 6) point towards a common side of the longitudinal axis (4), an attachment surface (12) for a tool, extending at right angles to the longitudinal axis (4) in the elongated position, being disposed on the front gear head part (3) and provided for driving the gear head parts (1, 2, 3) are three drive shafts (13, 18, 26) extending concentrically with respect to the longitudinal axis (4), whereof one of the inner drive shafts (18) is connected by way of an angular drive (19, 20) and an intermediate shaft (21) rotating about the inclined axis of rotation (5) to the front gear head part (3) supporting the tool and the other of the inner drive shafts (13) is connected by an angular drive (14, 15), whereof the output gear (15) surrounds the intermediate shaft (21) concentrically with clearance, to the central gear head part (2) and that disposed in the central head part (2) is at least one reduction gear (25) having a high step-down ratio for driving the front head part (3), preferably also a reduction gear (17) of this type for driving the central head part (2).

2. Gear head according to Claim 1, characterised in that the rear head part (1) consists of two flange parts (30, 31) connected to each other and offset laterally, due to which the axes of rotation (5, 6) of the intermediate shaft (21) and of the output shaft (24) are offset transversely with respect to the longitudinal axis (4).

**Revendications**

1. Tête de transmission pour des manipulateurs, constituée par trois éléments (1, 2, 3), qui sont disposés l'un derrière l'autre, sont tourillonnés sur des axes (5, 6) inclinés les uns par rapport aux autres et, lorsque la tête de transmission est à l'état déployé, font des angles respectifs (α) s'ouvrant dans des directions opposées, avec l'axe longitudinal (4) de la tête de transmission et se recoupent en un point (9') situé sur l'axe longitudinal (4) de telle sorte que les côtés des angles, formés par les axes obliques (5, 6), sont tournés d'un même côté de l'axe longitudinal (4), et dans lequel sur l'élément avant (3) de la tête de transmission se trouve disposée une surface (12), qui s'étend transversalement par rapport à l'axe longitudinal (4), dans la position déployée, et est prévue pour le raccordement par bride d'un outil, et il est prévu, pour l'entraînement des éléments (1, 2, 3) de la tête de transmission, trois arbres d'entraînement concentriques (13, 18, 26), qui sont coaxiaux avec l'axe longitudinal (4) et parmi lesquels l'un des arbres d'entraînement intérieurs (18) est relié, par l'intermédiaire d'un dispositif angulaire d'entraînement (19, 20) et d'un arbre intermédiaire (21) tournant autour de l'axe oblique de rotation (5), à l'élément avant (3) de la tête de transmission, portant l'outil, tandis que l'autre des arbres d'entraînement intérieurs (13) est relié à l'élément médian (2) de la tête de transmission par l'intermédiaire d'un dispositif angulaire d'entraînement (14, 15), dont le pignon mené (15) entoure concentriquement, avec jeu, l'arbre intermédiaire (21), caractérisé par le fait qu'au moins une transmission démultiplicatrice (25) réalisant une forte démultiplication et servant à entraîner l'élément de tête avant (3) et de préférence également une telle transmission démultiplicatrice (17) servant à entraîner l'élément de tête médian (2) sont disposées dans cet élément de tête.

2. Tête de transmission suivant la revendication 1, caractérisée par le fait que l'élément de tête arrière (1) est constitué par deux éléments de bride (30, 31) reliés entre eux en étant décalés latéralement, ce qui a pour effet que les axes de rotation (5, 6) de l'arbre intermédiaire (21) et de l'arbre mené (24) sont décalés transversalement par rapport à l'axe longitudinal (4).

Fig. 1

Fig. 2

Fig. 3

Fig. 4

Fig. 5

FIG.6

EP 0 169 942 B1